# EUROPEAN PATENT SPECIFICATION

(11) **EP 3 868 900 B1**
(45) Date of publication and mention of the grant of the patent: **02.08.2023**
(21) Application number: 21168851.0
(22) Date of filing: 21.10.2014
(51) Int. Cl.: C21D 1/673, B21D 24/16, B21D 37/16, B21D 22/02

(54) **METHOD FOR TRIMMING A HOT FORMED PART**
VERFAHREN ZUM BEARBEITEN EINES HEISSGESCHMIEDETEN TEILS
PROCÉDÉ D'ÉBAVURAGE D'UNE PIÈCE FORMÉE À CHAUD

(30) Priority: 21.10.2013 US 201361893318 P
(43) Date of publication of application: 25.08.2021
(62) Divisional of application: 14856044.4
(73) Proprietor: Magna International Inc., Aurora, ON L4G 7K1 (CA)
(72) Inventor: STEINEBACH, Edward, K., Oak Ridge, TN 37830 (US); JONES, Mark, Justin, Knoxville, TN 37934 (US); BRADY, Jeremiah, John, Knoxville, TN 37922 (US); ADAMS, Kenneth, R., Troy, MI 48098 (US)
(74) Representative: Glawe, Delfs, Moll

(56) References cited:
- DE-A1-102006 026 805
- DE-A1-102007 002 678
- DE-A1-102011 110 597
- US-A1- 2007 164 470
- US-A1- 2010 018 277

## Description

### CROSS-REFERENCE TO PRIOR APPLICATIONS

This PCT Patent Application claims the benefit of U.S. Provisional Patent Application Serial No. 61/893,318 filed October 21, 2013, entitled "Method For Trimming A Hot Formed Part ".

### BACKGROUND OF THE INVENTION

### 1. Field of the Invention

The invention relates generally to hot formed steel parts, such as automotive body components, and methods for manufacturing the hot formed steel parts.

### 2. Related Art

Automotive body components are oftentimes manufactured by hot forming a steel blank. The process includes heating the steel blank in an oven to a temperature of approximately 850° C to 900° C until the steel blank obtains an austenite microstructure. Next, the heated blank is transferred from the oven to a hot forming apparatus which includes a pair of dies. The heated blank is then stamped or pressed to a predetermined shape between the dies. The hot forming process also typically includes a quenching step to increase the strength of the hot formed part. During the quenching step, the hot formed part is cooled to a temperature low enough to transform the austenite microstructure to a martensite microstructure.

After the hot forming process, the hot formed part is removed from the dies and transferred to a separate location for at least one post-forming operation. The hot formed part is typically trimmed, pierced, sheared, or otherwise cut to achieve a desired shape. However, due to the high strength of the martensite microstructure present in the hot formed part, expensive post-forming processes and equipment are typically required to cut the hot formed part and achieve the desired shape. For example, a costly laser cutting process is oftentimes used to trim the hot formed part.

DE 10 2011 110 597 A1 describes a device for hot forming a semifinished product into a sheet metal part and for cutting the sheet metal part and, if necessary, for subsequent hardening of the sheet metal part.

### SUMMARY OF THE INVENTION

The invention provides a hot forming apparatus for hot forming a steel part, as defined in the appended claims.
To illustrate a potential application of the apparatus according to the invention, the following describes a method for manufacturing a hot formed steel part, such as an automotive body component, which is trimmed, pierced, sheared, or otherwise cut to a desired shape, without a costly post-forming operation, such as laser cutting. The method first includes heating a blank formed of steel material to a temperature of 880° C to 950° C, and maintaining the blank at the temperature of 880° C to 950° C until the microstructure of the steel material is substantially austenite. The method then includes disposing the blank on a lower forming surface of a lower die while the blank is at a temperature of at least 400° C and the microstructure of the blank is still substantially austenite. The heated blank is initially spaced from an upper forming surface of an upper die. The upper die is coupled to a cutting component, and the cutting component is disposed adjacent the upper forming surface.

The method next includes bringing the upper die toward the lower die to form and cut the heated blank. The step of bringing the upper die toward the lower die includes bringing the upper forming surface of the upper die into contact with the blank to form the blank between the upper and lower forming surfaces; and moving at least a portion of the upper die and the cutting component together longitudinally until the cutting component cuts at least a portion of the blank. The cutting step is conducted while the blank is at a temperature of at least 400° C and the microstructure of the blank is substantially austenite.

The method further includes cooling the blank at a rate of at least 27 degrees per second. The cooling step is conducted while the upper forming surface and the lower surface remain in contact with the cut blank and until the microstructure of the cut blank includes martensite.

### BRIEF DESCRIPTION OF THE DRAWINGS

Other advantages of the present invention will be readily appreciated, as the same becomes better understood by reference to the following detailed description when considered in connection with the accompanying drawings wherein:
Figure 1 illustrates a method of manufacturing a hot formed part as a background for the invention;
Figure 2A is a cross-sectional view of a hot forming apparatus according to an exemplary embodiment of the invention immediately before a cutting step;
Figure 2B is a cross-sectional view of a hot forming apparatus according to an exemplary embodiment of the invention immediately after a cutting step;
Figure 3 is a cross-sectional view of a hot forming apparatus according to another exemplary embodiment of the invention;
Figure 4 is a perspective view of an exemplary hot formed part showing an approximate temperature profile along the hot formed part at the start of a cutting step; and
Figure 5 is a chart illustrating a load force applied to a hot formed part by a cutting component of a hot forming apparatus according to an exemplary embodiment of the invention.

### DETAILED DESCRIPTION

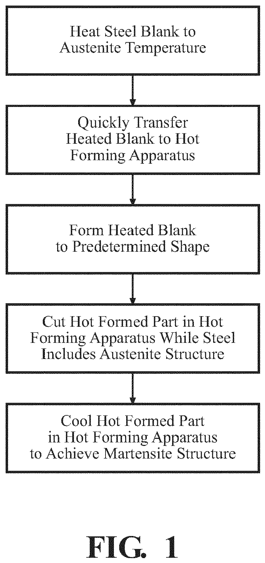

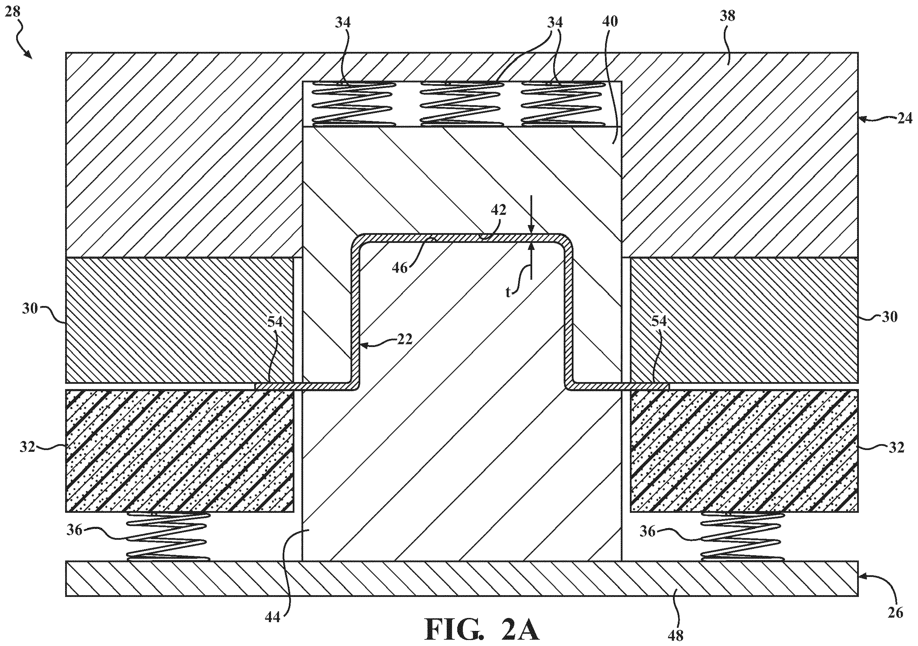

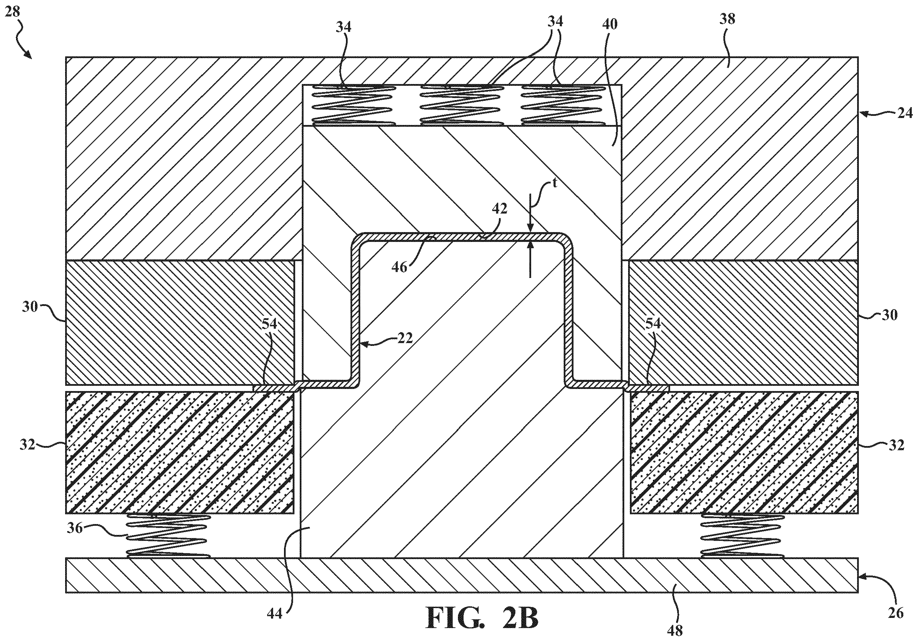

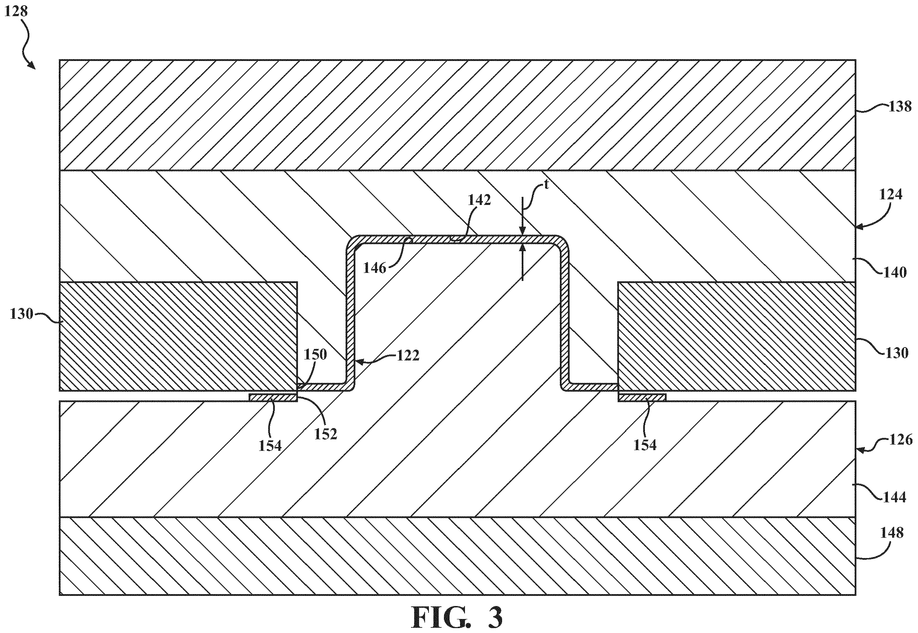

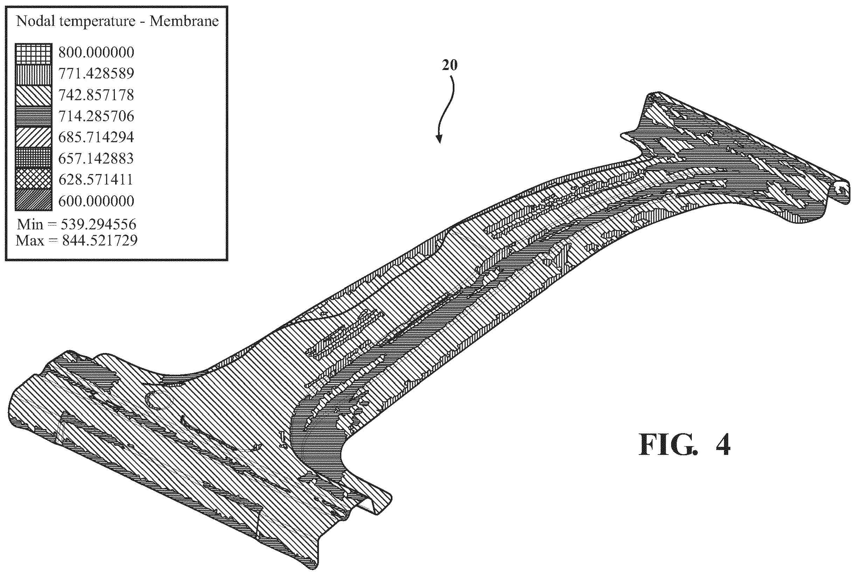

To illustrate a potential application of the apparatus according to the invention, the following describes an improved method for manufacturing a hot formed steel part **20,** such as an automotive body component, without a costly post-forming operation. The method includes heating a steel blank **22** to an austenite temperature, and cutting the heated blank **22** while forming the heated blank **22,** or immediately after forming the heated blank **22,** between a pair of dies **24, 26** of a hot forming apparatus **28.** The cutting step occurs while the microstructure of the blank **22** is still substantially austenite. Figure 1 illustrates steps of the hot forming method according to an exemplary embodiment. Figures 2A, 2B, and 3 illustrate exemplary hot forming apparatuses **28,** and Figure 4 illustrates an exemplary hot formed part **20.**

The method begins by providing the blank **22** formed of a steel material, which can be any type of steel material. In one embodiment, the steel material used to form the blank **22** comprises 0.18% to 0.28% carbon, 0.7% to 1.0% silicon, 1.0% to 2.0% manganese, 0.12% to 0.7% chromium, 0.1% to 0.45% molybdenum, 0.025% maximum phosphorus, 0.008% to 0.01% sulfur, 0.02% to 0.05% titanium, 0.01% to 0.06% aluminum, and 0.002% to 0.004% boron, based on the total weight of the steel material. In another embodiment, the steel material comprises a mixture of manganese and boron, for example 22MnB5. The size and shape of the blank **22** depends on the desired size, shape, and application of the hot formed part **20** to be manufactured. In one embodiment, the blank **22** is initially provided with a coating formed of aluminum and silicon (AlSi). This coating ultimately forms a diffusion layer along the surface of the hot formed part **20.**

Once the blank **22** is provided, the method includes annealing or otherwise heating the blank **22** in an oven or furnace. The blank **22** is heated or annealed for a period of time causing an austenite microstructure to form throughout the steel material. The temperature and duration of the heating step varies depending on the dimensions of the blank **22** and type of steel material used. However, the blank **22** is typically heated to a temperature of 880° C to 950° C and is held at that temperature for at least 30 seconds to form the austenite microstructure. In one embodiment, the blank **22** is heated to a temperature of 910° C for at least 20 seconds. In another embodiment, the blank **22** is heated to a temperature of 930° C for at least 20 seconds. During the heating step, all carbides in the steel material of the blank **22** should dissolve so that there are no residual carbides. After the heating step, the microstructure of the steel material is substantially austenite, for example at least 75% austenite, or entirely austenite (100% austenite).

The heating step is adjusted slightly when the steel blank **22** is coated with the AlSi coating, as additional time is required for the AlSi coating to form a diffusion layer having a sufficient thickness along the surface of the blank **22.** Maintaining the blank **22** at a temperature above 800° C for at least 150 seconds is typically required for the AlSi coating to form a diffusion layer having a sufficient thickness. Additional heating time is also required due to the reflective nature of the AlSi coating at temperatures of 580° C to 780° C.

Immediately following the heating step, the heated blank **22** is quickly transferred from the oven to the hot forming apparatus **28** while the blank **22** is still above the austenite temperature and thus still includes the substantially austenite microstructure. In one embodiment, the steel material of the blank **22** is entirely austenite when it enters the hot forming apparatus **28.** In another embodiment, the steel material of the blank **22** includes at least 75% austenite, but less than 100% austenite, when it enters the hot forming apparatus **28.** The blank **22** is transferred quickly to the hot forming apparatus **28** so that the temperature of the blank **22** stays above 400° C.

The method next includes forming and trimming, piercing, shearing, or otherwise cutting the heated blank **22** to a desired shape in the hot forming apparatus **28.** The forming and cutting steps both occur in the hot forming apparatus **28** and during a single die stroke. In other words, the cutting step occurs simultaneously with the forming step or immediately thereafter. The blank **22** is at a temperature of at least 400° C, such as a temperature of 400° C to 800° C during the forming and cutting steps. In addition, the forming and cutting steps are both conducted while the steel material includes a 100% austenite microstructure or at least a substantially austenite microstructure.

Figures 2A and 2B illustrate an exemplary hot forming apparatus **28** in a closed position. In this embodiment, the hot forming apparatus **28** includes an upper die **24,** a lower die **26,** a cutting component **30,** a pad **32,** upper springs **34,** and lower springs **36.** The cutting component **30** and upper springs **34** are fixed to a first portion **38** of the upper die **24,** for example by bolts. A second portion **40** of the upper die **24,** referred to as an upper form, presents an upper forming surface **42** and is surrounded by the first portion **38** and the cutting component **30.** The upper springs **34** are disposed on the second portion **40** and bias the first portion **38** away from the second portion **40.** Thus, the first portion **38** and connected cutting component **30** are movable relative to the second portion **40** of the upper die **24.** For example, when the upper springs **34** are compressed, the first portion **38** of the upper die **24** and cutting component **30** move together longitudinally such that the cutting component **30** moves past the upper forming surface **42** and toward the pad **32.** The cutting component **30** is formed of a material capable of cutting the steel material of the blank **22.** In the exemplary embodiments, the cutting component **30** is also formed of a steel material, referred to as trim steel.

As shown in Figures 2A and 2B, the lower die **26** includes a third portion **44,** referred to as a lower form, which presents a lower forming surface **46** for supporting the steel blank **22.** The lower springs **36** are fixed to a fourth portion **48** of the lower die **26,** for example by bolts. The pad **32** is disposed on opposite sides of the lower forming surface **46** beneath the cutting component **30,** and the lower springs **36** bias the pad **32** toward the cutting component **30** and the upper die **24.** Although the Figures show the upper die **24** positioned above the lower die **26,** the position of the hot forming apparatus **28** could be reversed such that the upper die **24** is positioned below the lower die **26.**

Prior to the forming step, the hot forming apparatus **28** is in an open position, and thus the upper die **24** and cutting component **30** are spaced from the lower die **26** and pad **32.** The geometry of the upper forming surface **42** and the lower forming surface **46** varies depending on the desired shape of the part **20** to be formed. In the embodiment of Figures 2A and 2B, the upper forming surface **42** is recessed, and the lower forming surface **46** is received in the recessed upper forming surface **42** when the apparatus **20** is closed. Also, prior to the forming step, when the hot forming apparatus **28** is open, no pressure is placed on the lower springs **36,** such that the lower springs **36** are extended and the pad **32** is generally aligned with a portion of the lower forming surface **46.**

The forming step occurs immediately after transferring the heated blank **22** to the hot forming apparatus **28,** so that the temperature of the blank **22** stays above 400° C. In the embodiment of Figures 2A and 2B, the heated blank **22** is disposed on the uppermost portion of the lower forming surface **46** such that the edges of the heated blank **22** project outwardly of the lower forming surface **46** and are located above the pad **32.** The forming step then includes bringing the first and second portions **38, 40** of the upper die **24** together with the cutting component **30** downwardly toward the lower die **26** and the heated blank **22.** While the upper die **24** and cutting component **30** move downward toward the heated blank **22,** the upper springs **34** are not compressed. Thus, the first portion **38** of the upper die **24** and the cutting component **30** do not move relative to the second portion **40** of the upper die **24** during the forming step.

As the upper die **24** moves downward, the upper forming surface **42** contacts and presses the heated steel blank **22** around the lower forming surface **46** to form the blank **22** to a predetermined shape, as shown in Figures 2A and 2B. The upper forming surface **42** presses the heated blank **22** until the edges of the heated blank **22** rest on or slightly above the pad **32** on opposite sides of the lower forming surface **46.** The steel material of the blank **22** is still substantially austenite during the forming step, for example at least 75% austenite or 100% austenite.

The method further includes cutting the heated blank **22** to provide the desired shape while the blank **22** is still in the hot forming apparatus **28** and includes the substantially austenite microstructure. The cutting step occurs during the same die stroke as the forming step. In the exemplary embodiment of Figures 2A and 2B, the first portion **38** of the upper die **24** compresses the upper springs **34,** and the first portion **38** and the cutting component **30** continue moving downward together while the second portion **40** of the upper die **24** remains in a fixed position. The cutting component **30** then moves longitudinally past the upper forming surface **42** while the upper forming surface **42** remains in contact with the heated blank **22.** During the cutting step, the cutting component **30** cuts at least a portion of the steel blank **22.** In one embodiment, the cutting component **30** moves past the lower forming surface **46** and shears the edges off the blank **22.** In this case, the cutting component **30** presses the edges, referred to as scrap **54,** into the pad **32,** thereby compressing the lower springs **36.** In this embodiment, the cutting component **30** cuts through the entire thickness **t** of the blank **22,** and the desired final shape of the blank **22** is achieved without any post-forming operation outside of the hot forming apparatus **28,** such as laser trimming. In another embodiment, shown in Figure 2B, only a portion of the thickness **t** of the blank **22** is cut by the cutting component **30** in the hot forming apparatus **28.** For example, the cutting component **30** may cut through not greater than 95%, for example 75% to 95%, or 90% of the thickness **t** of the steel blank **22.** In this case, the scrap **54** remains attached to the blank **22,** but is easily removed from the part **20** outside of the hot forming apparatus **28.**

An alternate embodiment of the hot forming apparatus **128** is shown in Figure 3. The method conducted using the forming apparatus of Figure 3 is referred to as a "zero entry" method. In this embodiment, the hot forming apparatus **128** includes the cutting component **130** fixed to the first portion **138** of the upper die **124,** without the upper springs **34,** lower springs **36,** and pad **32.** The second portion **140** of the upper die **124** presents the recessed upper forming surface **142** and the third portion **144** of the lower die **126** presents the lower forming surface **146.** However, unlike the hot forming apparatus **28** of Figures 2A and 2B, the cutting component **130** is fixed to the second portion **140** of the upper die **124,** and the second portion **140** is fixed to the first portion **138.** In addition, the upper forming surface **142** and the cutting component **130** provide an upper ledge **150** therebetween, and the lower forming surface **146** presents a lower ledge **152** aligned with the upper ledge **150** for shearing the heated blank **122.** As in the embodiment of Figures 2A and 2B, the upper die **124** and cutting component **130** move downward, and the upper forming surface **142** presses the heated blank **122** around the lower forming surface **146** to a predetermined shape.

As alluded to above, in the embodiment of Figure 3, the cutting component **130** does not move relative to the first portion **138** or the second portion **140** of the upper die **124.** Instead, the upper ledge **150** of the upper die **124** moves toward the lower ledge **152** of the lower die **126** to shear the edges off the heated blank **122.** Alternatively, the cutting component **130** could cut through less than 95% of the thickness **t** of the blank **122,** such that the scrap **154** remains connected to the blank **122,** but can be easily removed outside of the hot forming apparatus **128.** In either case, the shearing step begins when the distance between the upper ledge **150** and lower ledge **152** is equal to the thickness **t** of the steel blank **122.** As in the embodiment of Figures 2A and 2B, the forming and cutting steps occur in a single die stroke and while the microstructure of the blank **122** is substantially austenite.

In other embodiments, the cutting step can include trimming, piercing, or another type of cutting technique, instead of shearing, or in addition to shearing. Thus, the cutting component **30** of the hot forming apparatus **28** is designed accordingly. Preferably, the hot forming apparatus **28** is designed so that the cutting clearance, also referred to as the die clearance, is between 2% and 15% of the thickness **t** of the blank **22.** In the embodiments of Figures 2A, 2B, and 3 the cutting clearance is equal to the distance between a cutting edge of the cutting component **30** and a cutting edge of the adjacent lower forming surface **46,** when the hot forming apparatus **28** is closed.

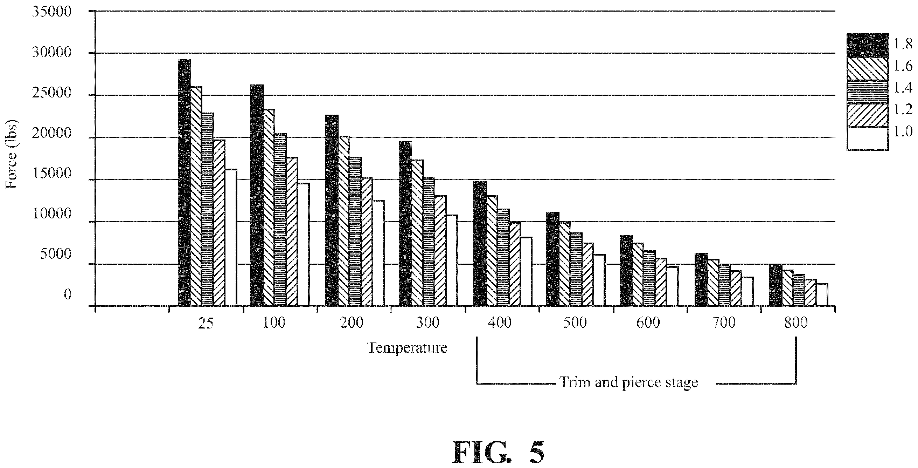

As stated above, the step of cutting the blank **22** occurs while the steel material is still at a temperature of at least 400° C, preferably 400° C to 850° C, and still has a substantially austenite microstructure. Figure 4 is a perspective view of an exemplary hot formed part **20,** specifically a B-pillar, showing the approximate temperature profile along the part **20** at the start of the cutting step, which in this case includes trimming and piercing. The temperature profile indicates that the majority of the hot formed part **20** is at a temperature of at least 685° C and the steel material is still 100% austenite at the start of the cutting step. Figure 5 is a chart illustrating the load force applied to the hot formed part **20** by a 16 mm cutting component **30,** such as a punch. The load force is provided for temperatures ranging from 25° C to 800° C, and for part thicknesses **t** ranging from 1.0 to 1.8 mm. Figure 5 also indicates that the temperature of the cutting step is from 400° C to 800° C.

In order for the microstructure of the blank **22** to remaining substantially austenite during the cutting step, a quick process is required. In one embodiment, when the steel material includes 100% austenite during the cutting step, the amount of time from when the heated blank **22** exits the oven until forming the heated blank **22** between the forming surfaces **42, 46,** i.e. the time at which the hot forming apparatus **28** is closed, is only 5 to 15 seconds. In another embodiment, when the steel material includes some retained austenite during the cutting step, but less than 100% austenite, the amount of time from when the heated blank **22** exists through the door of the oven until the hot forming apparatus **28** is closed is 5 to 20 seconds.

After the forming and cutting steps, the method includes cooling the blank **22** in the hot forming apparatus **28,** while the hot forming apparatus **28** is still closed. The cooling step typically includes quenching. The hot forming apparatus **28** can include any type of cooling mechanism to cool or quench the hot formed blank **22.** For example, the upper and lower dies **24, 26** could include a plurality of cooling channels for conveying a cooling fluid therethrough.

The hot formed blank **22** should be cooled or quenched at a rate that causes a martensite microstructure to form in the steel material, and preferably throughout the entire steel material so that the finished hot formed part **20** is 100% martensite. The martensite microstructure provides increased strength which is beneficial when the hot formed part **20** is used as an automotive body component, such as a B-pillar. In one embodiment, the method includes cooling the hot formed blank **22** at a minimum cooling rate of 27 degrees per second to obtain the martensite microstructure throughout the steel material. The method finally includes opening the hot forming apparatus **28** once the temperature of the hot formed part **20** is 200° C or lower, and allowing the hot formed part **20** to cool to room temperature. Since the cutting step is performed in the hot forming apparatus **28,** the method does not require any costly post-forming operations outside of the hot forming apparatus **28,** such as a separate laser cutting process. If the scrap **54** remains attached to the hot formed part **20,** a simple and inexpensive post-forming operation can be used to remove the scrap **54.**

To illustrate a product obtainable with the apparatus according to the invention, the following describes a hot formed part **20** manufactured using the method and hot forming apparatus **28** described above. The hot formed part **20** is manufactured by forming the heated blank **22** to a predetermined shape and then trimming, piercing, shearing, or otherwise cutting the blank **22** in the hot forming apparatus **28** to achieve a desired shape. Thus, there is no need for a costly post-forming operation, such as laser trimming. The hot formed part **20** preferably includes a martensite microstructure throughout the steel material with no residual carbides in the steel material, which could decrease the ultimate tensile strength (UTS) of the part **20.** In addition, the hot formed part **20** can optionally include a diffusion layer comprising AlSi. In one embodiment, the hot formed part **20** has a yield strength of 500 MPa to 1,600 MPa; an ultimate tensile strength (UTS) of 900 MPa to 2,000 MPa; an elongation of 5.0%, minimum; and a hardness (HRV) of 300 to 600. The hot formed part **20** can be designed for use as any type of automotive body component, such as a pillar, rocker, roof rail, bumper, or door intrusion beam of an automotive vehicle. In one embodiment, the hot formed part **20** is a B-pillar having the design shown in Figure 4. Alternatively, the hot formed part **20** can be used in a non-automotive application.

## Claims

1. A hot forming apparatus for hot forming a steel part, comprising
a lower die (26, 126) with a lower forming surface (46, 146),
an upper die (24, 124) with an upper forming surface (42, 142),
wherein the upper die (24, 124) is coupled to a cutting component (30, 130), and the cutting component (30, 130) is disposed adjacent the upper forming surface (42, 142);
the hot forming apparatus having an open position in which the upper die (24, 124) and cutting component (30, 130) are spaced from the lower die (26, 126), and
the hot forming apparatus having a closed position in which the upper die (24, 124) is brought toward the lower die (26, 126),
the hot forming apparatus being set up such that a heated blank (22, 122) formed of steel material can be disposed on the lower forming surface (46, 146) while the blank (22, 122) is at a temperature of at least 400 °C, the hot forming apparatus further being set up for bringing the upper die (24, 124) toward the lower die (26, 126)after the heated blank (22, 122) is disposed on the lower forming surface (46, 146),
wherein
- the upper forming surface (42, 142) of the upper die (24, 124) can be brought into contact with the blank (22, 122) to form the blank (22, 122) between the upper and lower forming surfaces (46, 146) and
- at least a portion of the upper die (24, 124) and the cutting component (30, 130) can be moved together longitudinally until the cutting component (30, 130) comes into a position to cut at least a portion of the blank (22, 122)
with the hot forming apparatus being configured for conducting cutting of the blank (22, 122) while the blank (22, 122) is at a temperature of at least 400 °C and the microstructure of the blank (22, 122) is substantially austenite,
the hot forming apparatus further including a cooling mechanism set up to cool or quench the hot formed blank (22, 122) at a rate of at least 27 degrees per second while the upper forming surface (42, 142) and the lower surface remain in contact with the blank (22, 122) and until the microstructure of the blank (22, 122) includes martensite,
wherein either the cutting component (30, 130) is set up to move longitudinally relative to the upper forming surface (42, 142), such that the cutting is set up to occur after the forming and is set up to include moving the cutting component (30, 130) longitudinally past the upper forming surface (42, 142), or
wherein the cutting component (30, 130) is fixed relative to the upper forming surface (42, 142) with an upper ledge (150) provided between the upper forming surface (42, 142) and the cutting component (30, 130) and the lower forming surface (46, 146) presenting a lower ledge aligned with the upper ledge (150), such that the cutting is set up to occur simultaneously with the forming step and is set up to include moving the upper ledge (150) toward the lower ledge.

2. The apparatus of claim 1, wherein the cutting component (30, 130) is set up to cut through not greater than 95% of the thickness of the blank (22, 122) during the cutting.

3. The apparatus of claim 1, wherein the cutting component (30, 130) is set up to cut through the entire thickness of the blank (22, 122) during the cutting.

4. The apparatus of claim 1, wherein a first portion of the upper die (24) is coupled to the cutting component (30), a second portion of upper die (24) presents the upper forming surface (42), the cutting component (30) is movable relative to the second portion of the upper die (24), and the first portion of the upper die (24) is biased away from the second portion.

5. The apparatus of claim 4, wherein a pad is disposed adjacent the lower forming surface (46) of the lower die (26) beneath the cutting component (30), and the pad is biased toward the upper die (24).

6. The apparatus of claim 1, wherein the apparatus is set up to function with the blank (22, 122) being at a temperature of at least 685 °C and the micro structure of the blank (22, 122) being entirely austenite during the cutting.

7. The apparatus of claim 1, wherein the blank (22, 122) has a thickness, the upper (24, 124) and lower dies (26, 126) present a cutting clearance therebetween, and the cutting clearance is 2% to 15% of the thickness of the blank (22, 122) .

8. The apparatus of claim 1, wherein the apparatus is set up to include in the cutting step at least one of trimming, piercing, and shearing the blank (22, 122).

## Patentansprüche

1. Warmformvorrichtung zum Warmformen eines Stahlteils, umfassend
ein unteres Formwerkzeug (26, 126) mit einer unteren Formoberfläche (46, 146),
ein oberes Formwerkzeug (24, 124) mit einer oberen Formoberfläche (42, 142),
wobei das obere Formwerkzeug (24, 124) an eine Schneidkomponente (30, 130) gekoppelt ist und die Schneidkomponente (30, 130) benachbart zu der oberen Formoberfläche (42, 142) angeordnet ist;
wobei die Warmformvorrichtung eine offene Stellung aufweist, bei der das obere Formwerkzeug (24, 124) und die Schneidkomponente (30, 130) von dem unteren Formwerkzeug (26, 126) beabstandet sind, und
die Warmformvorrichtung eine geschlossene Stellung aufweist, bei der das obere Formwerkzeug (24, 124) zu dem unteren Formwerkzeug (26, 126) gebracht ist,
wobei die Warmformvorrichtung so eingerichtet ist, dass ein erhitzter Rohling (22, 122) aus Stahlmaterial auf der unteren Formoberfläche (46, 146) angeordnet werden kann, während sich der Rohling (22, 122) bei einer Temperatur von wenigstens 400 °C befindet, wobei die Warmformvorrichtung ferner dafür eingerichtet ist, das obere Formwerkzeug (24, 124) zu dem unteren Formwerkzeug (26, 126) zu bringen, nachdem der erhitzte Rohling (22, 122) auf der unteren Formoberfläche (46, 146) angeordnet worden ist,
wobei
- die obere Formoberfläche (42, 142) des oberen Formwerkzeugs (24, 124) in Kontakt mit dem Rohling (22, 122) gebracht werden kann, um den Rohling (22, 122) zwischen der oberen und der unteren Formoberfläche (46, 146) zu formen, und
- wenigstens ein Teil des oberen Formwerkzeugs (24, 124) und der Schneidkomponente (30, 130) zusammen in Längsrichtung bewegt werden können, bis die Schneidkomponente (30, 130) in eine Position zum Schneiden wenigstens eines Teils des Rohlings (22, 122) kommt,
wobei die Warmformvorrichtung dafür gestaltet ist, Schneiden des Rohlings (22, 122) durchzuführen, während sich der Rohling (22, 122) bei einer Temperatur von wenigstens 400 °C befindet und die Mikrostruktur des Rohlings (22, 122) im Wesentlichen Austenit ist,
wobei die Warmformvorrichtung ferner einen Kühlmechanismus aufweist, der dafür eingerichtet ist, den warmgeformten Rohling (22, 122) mit einer Rate von wenigstens 27 Grad pro Sekunde abzukühlen oder abzuschrecken, während die obere Formoberfläche (42, 142) und die untere Oberfläche in Kontakt mit dem Rohling (22, 122) bleiben, bis die Mikrostruktur des Rohlings (22, 122) Martensit enthält,
wobei entweder die Schneidkomponente (30, 130) dafür eingerichtet ist, sich in Längsrichtung relativ zu der oberen Formoberfläche (42, 142) zu bewegen, so dass das Schneiden dafür eingerichtet ist, nach dem Formen zu erfolgen, und dafür eingerichtet ist, Bewegen der Schneidkomponente (30, 130) in Längsrichtung über die obere Formoberfläche (42, 142) hinaus einzuschließen, oder
wobei die Schneidkomponente (30, 130) relativ zu der oberen Formoberfläche (42, 142) fest steht, wobei eine obere Kante (150) zwischen der oberen Formoberfläche (42, 142) und der Schneidkomponente (30, 130) bereitgestellt ist und die untere Formoberfläche (46, 146) eine untere Kante aufweist, die gegenüber der oberen Kante (150) ausgerichtet ist, so dass das Schneiden dafür eingerichtet ist, gleichzeitig mit dem Formschritt zu erfolgen, und dafür eingerichtet ist, Bewegen der oberen Kante (150) zu der unteren Kante einzuschließen.

2. Vorrichtung gemäß Anspruch 1, wobei die Schneidkomponente (30, 130) dafür eingerichtet ist, während des Schneidens durch nicht mehr als 95 % der Dicke des Rohlings (22, 122) zu schneiden.

3. Vorrichtung gemäß Anspruch 1, wobei die Schneidkomponente (30, 130) dafür eingerichtet ist, während des Schneidens durch die gesamte Dicke des Rohlings (22, 122) zu schneiden.

4. Vorrichtung gemäß Anspruch 1, wobei ein erster Teil des oberen Formwerkzeugs (24) an die Schneidkomponente (30) gekoppelt ist, ein zweiter Teil des oberen Formwerkzeugs (24) die obere Formoberfläche (42) darstellt, die Schneidkomponente (30) relativ zu dem zweiten Teil des oberen Formwerkzeugs (24) beweglich ist und der erste Teil des oberen Formwerkzeugs (24) von dem zweiten Teil weg vorgespannt ist.

5. Vorrichtung gemäß Anspruch 4, wobei ein Kissen benachbart zu der unteren Formoberfläche (46) des unteren Formwerkzeugs (26) unterhalb der Schneidkomponente (30) angeordnet ist und das Kissen in Richtung zu dem oberen Formwerkzeug (24) vorgespannt ist.

6. Vorrichtung gemäß Anspruch 1, wobei die Vorrichtung dafür eingerichtet ist, mit dem Rohling (22, 122) bei einer Temperatur von wenigstens 685 °C zu arbeiten, wobei die Mikrostruktur des Rohlings (22, 122) während des Schneidens vollständig Austenit ist.

7. Vorrichtung gemäß Anspruch 1, wobei der Rohling (22, 122) eine Dicke aufweist, das obere (24, 124) und das untere Formwerkzeug (26, 126) einen Schneidspalt zwischen sich aufweisen und der Schneidspalt 2 % bis 15 % der Dicke des Rohlings (22, 122) entspricht.

8. Vorrichtung gemäß Anspruch 1, wobei die Vorrichtung dafür eingerichtet ist, bei dem Schneidschritt wenigstens eines von Zuschneiden, Durchstechen und Scheren des Rohlings (22, 122) einzuschließen.

## Revendications

1. Appareil de formage à chaud, destiné à former à chaud une pièce en acier, comprenant
une matrice inférieure (26, 126) avec une surface de formage inférieure (46, 146),
une matrice supérieure (24, 124) avec une surface de formage supérieure (42, 142),
dans lequel la matrice supérieure (24, 124) est accouplée à un composant de découpe (30, 130), et le composant de découpe (30, 130) est disposé de façon adjacente à la surface de formage supérieure (42, 142) ;
l'appareil de formage à chaud ayant une position ouverte dans laquelle la matrice supérieure (24, 124) et le composant de découpe (30, 130) sont espacés de la matrice inférieure (26, 126), et
l'appareil de formage à chaud ayant une position fermée dans laquelle la matrice supérieure (24, 124) est mise vers la matrice inférieure (26, 126),
l'appareil de formage à chaud étant configuré de telle sorte qu'une pièce brute chauffée (22, 122) formée de matériau en acier puisse être disposée sur la surface de formage inférieure (46, 146) alors que la pièce brute (22, 122) est à une température d'au moins 400 °C, l'appareil de formage à chaud étant en outre configuré pour mettre la matrice supérieure (24, 124) vers la matrice inférieure (26, 126) après que la pièce brute chauffée (22, 122) est disposée sur la surface de formage inférieure (46, 146), dans lequel
- la surface de formage supérieure (42, 142) de la matrice supérieure (24, 124) peut être mise en contact avec la pièce brute (22, 122) pour former la pièce brute (22, 122) entre les surfaces de formage supérieure et inférieure (46, 146) et
- au moins une partie de la matrice supérieure (24, 124) et le composant de découpe (30, 130) peuvent être déplacés ensemble longitudinalement jusqu'à ce que le composant de découpe (30, 130) arrive dans une position pour découper au moins une partie de la pièce brute (22, 122), l'appareil de formage à chaud étant conçu pour réaliser la découpe de la pièce brute (22, 122) alors que la pièce brute (22, 122) est à une température d'au moins 400 °C et la microstructure de la pièce brute (22, 122) est sensiblement de l'austénite,
l'appareil de formage à chaud incluant en outre un mécanisme de refroidissement configuré pour refroidir ou tremper la pièce brute formée à chaud (22, 122) à un vitesse d'au moins 27 degrés par seconde alors que la surface de formage supérieure (42, 142) et la surface inférieure restent en contact avec la pièce brute (22, 122) et jusqu'à ce que la microstructure de la pièce brute (22, 122) inclue de la martensite,
dans lequel le composant de découpe (30, 130) est configuré pour se déplacer longitudinalement relativement à la surface de formage supérieure (42, 142), de telle sorte que la découpe soit configurée pour se produire après le formage et soit configurée pour inclure le déplacement du composant de découpe (30, 130) longitudinalement au-delà de la surface de formage supérieure (42, 142),
ou
dans lequel le composant de découpe (30, 130) est fixe relativement à la surface de formage supérieure (42, 142) avec un rebord supérieur (150) prévu entre la surface de formage supérieure (42, 142) et le composant de découpe (30, 130) et la surface de formage inférieure (46, 146) présentant un rebord inférieur aligné avec le rebord supérieur (150), de telle sorte que la découpe soit configurée pour se produire simultanément avec l'étape de formage et soit configurée pour inclure le déplacement du rebord supérieur (150) vers le rebord inférieur.

2. Appareil selon la revendication 1, dans lequel le composant de découpe (30, 130) est configuré pour découper à travers non plus de 95 % de l'épaisseur de la pièce brute (22, 122) durant la découpe.

3. Appareil selon la revendication 1, dans lequel le composant de découpe (30, 130) est configuré pour découper à travers l'épaisseur entière de la pièce brute (22, 122) durant la découpe.

4. Appareil selon la revendication 1, dans lequel une première partie de la matrice supérieure (24) est accouplée au composant de découpe (30), une seconde partie de matrice supérieure (24) présente la surface de formage supérieure (42), le composant de découpe (30) est mobile relativement à la seconde partie de la matrice supérieure (24), et la première partie de la matrice supérieure (24) est sollicitée à l'opposé de la seconde partie.

5. Appareil selon la revendication 4, dans lequel une plaque est disposée de façon adjacente à la surface de formage inférieure (46) de la matrice inférieure (26) en dessous du composant de découpe (30), et la plaque est sollicitée vers la matrice supérieure (24).

6. Appareil selon la revendication 1, dans lequel l'appareil est configuré pour fonctionner avec la pièce brute (22, 122) à une température d'au moins 685 °C et la microstructure de la pièce brute (22, 122) étant entièrement de l'austénite durant la découpe.

7. Appareil selon la revendication 1, dans lequel la pièce brute (22, 122) a une épaisseur, les matrices supérieure (24, 124) et inférieure (26, 126) présentent un espace libre de découpe entre celles-ci, et l'espace libre de découpe est de 2 % à 15 % de l'épaisseur de la pièce brute (22, 122).

8. Appareil selon la revendication 1, dans lequel l'appareil est configuré pour inclure, dans l'étape de découpe, au moins un parmi l'ébavurage, le perçage, et le cisaillage de la pièce brute (22, 122).
